# EUROPÄISCHE PATENTANMELDUNG

(11) **EP 1 705 465 A2**
(43) Veröffentlichungstag der Anmeldung: **27.09.2006**
(21) Anmeldenummer: 06005975.5
(22) Anmeldetag: 23.03.2006
(51) Int. Cl.: G01G 17/06

(54) **Farbkonzentrat-Dispenser sowie Verfahren zur Dosierung von Farbkonzentraten in ein Aufnahmebehältnis**

(30) Priorität: 23.03.2005 DE 102005014024
(71) Anmelder: Collomix Rühr-und Mischgeräte GmbH, 85080 Gaimersheim (DE)
(72) Erfinder: Viehböck, Ingo, 65510 Idstein (DE); Essing, Alexander, 65510 Idstein (DE)
(74) Vertreter: Liebl, Thomas

(57) **Zusammenfassung**

Die Erfindung betrifft einen Farbkonzentrat-Dispenser (1) mit einer Mehrzahl von Granulatbehältern (3), in denen in Farben und/oder Lacken lösliches, trockenes Farbkonzentratgranulat aufgenommen ist, wobei jeder Granulatbehälter (3) eine verschließbare Behälterauslassöffnung aufweist, die so mit einer Dosiereinrichtung (6) zusammenwirkt, dass eine vorgegebene Granulatmenge über die Behälterauslassöffnungen aus den für einen Dosierauftrag entsprechend vorgegebener Farben- oder Lackrezepturparameter benötigten Granulatbehältern (3) ausbringbar ist. Ferner ist ein Zwischenbehältnis (5) für die pro Dosierauftrag aus den Granulatbehältern (3) freigegebene Granulatmenge vorgesehen sowie eine Wägeeinrichtung (4), die während eines Dosierauftrags mit dem Zwischenbehältnis (5) gekoppelt ist. Mit einer Mengenregeleinrichtung, die mit der Wägeeinrichtung (4) und der Dosiereinrichtung (6) regelungstechnisch gekoppelt ist, wird die Zudosierung einer vorgegebenen Granulatmenge aus den Granulatbehältern (3) in das Zwischenbehältnis (5) in Abhängigkeit von einem Wägesignal der Wägeeinrichtung (4) geregelt.

## Beschreibung

Die Erfindung betrifft einen Farbkonzentrat-Dispenser nach dem Oberbegriff des Anspruchs 1 sowie ein Verfahren zur Dosierung von Farbkonzentraten in ein Aufnahmebehältnis nach dem Oberbegriff des Anspruchs 13.

Farbkonzentrat-Dispenser sind als sogenannte Pastendosiersysteme für flüssig-pastöse Farben als Farbkonzentrate allgemein bekannt. Bei diesen Pastendosiersystemen sind in einem Magazin des Dispensers eine Mehrzahl von unterschiedlichen Farbkartuschen austauschbar gehaltert, wobei in den Farbkartuschen jeweils eine andere Farbe aufgenommen ist. Je nach gewählter Farb-oder Lackrezeptur wird eine bestimmte Anzahl der Farbkartuschen gesteuert zu einem Dosierkopf bewegt, mittels dem auf volumetrische Art und Weise eine bestimmte, vorgegebene Menge der Farbe in ein unter dem Dosierkopf angeordnetes und eine Basisfarbe bzw. einen Basislack aufweisendes Farb-oder Lackgebinde eingespritzt wird. Dazu wird der Deckel des Farb- bzw. Lackgebindes abgenommen, was beim Hantieren mit dem geöffneten Gebinde sehr häufig zu Farbverschmutzungen im Bereich des Dispensers führt. Dosiert wird beispielsweise mit dosierkopfseitigen Umlaufpumpen oder Rotationspumpen, insbesondere mit Kolbenpumpen, Zahnradpumpen oder aber auch mit Balgpumpen, wobei je nach konkretem Aufbau der Vorrichtung anstelle einer sequenziellen Dosierung auch eine simultane Dosierung erfolgen kann. Zur Freigabe der Farben aus den Farbkartuschen werden weiter mechanisch oder elektromagnetisch betätigbare Ventile eingesetzt, wobei auch Ventile mit mehreren Dosierwegen zum Einsatz kommen können. Problematisch bei derartigen Aufbauten ist, dass die Farben z. B. in den Ventilen und im Dosierkopf austrocknen und damit die Funktionsfähigkeit der Armaturen sowie des Dispensers insgesamt beeinträchtigt wird.

Aufgabe der Erfindung ist es daher, einen alternativen Farbkonzentrat-Dispenser bzw. ein Verfahren zur Dosierung von Farbkonzentraten zur Verfügung zu stellen, mit dem die Zudosierung von Farbkonzentraten auf saubere und einfache Weise ohne die Gefahr einer Funktionsbeeinträchtigung des Dispensers sehr gut möglich ist.

Diese Aufgabe wird bezüglich der Vorrichtung gelöst mit den Merkmalen des Anspruchs 1.

Gemäß Anspruch 1 ist eine Mehrzahl von Granulatbehältern vorgesehen, in denen ein insbesondere in wässrigen Farben und/oder Lacken lösliches, trockenes Farbkonzentratgranulat aufgenommen ist, wobei jeder Granulatbehälter eine verschließbare Behälterauslassöffnung aufweist, die so mit einer Dosiereinrichtung zusammenwirkt, dass eine vorgegebene Granulatmenge über die Behälterauslassöffnungen aus den für einen Dosierauftrag entsprechend vorgegebener Farben- oder Lackrezepturparameter benötigten Granulatbehältern ausbringbar ist. Die Dosiervorrichtung weist ferner ein Aufnahme- bzw. Zwischenbehältnis für die pro Dosierauftrag aus den Granulatbehältern freizugebende Granulatmenge auf. Ebenso ist eine Wägeeinrichtung vorgesehen, die während eines Dosierauftrags mit dem Zwischenbehältnis gekoppelt ist. Des weiteren ist eine Mengenregeleinrichtung vorgesehen, die mit der Wägeeinrichtung und der Dosiereinrichtung regelungstechnisch gekoppelt ist und mittels der die Zudosierung einer vorgegebenen Granulatmenge aus den Granulatbehältern in das Zwischenbehältnis in Abhängigkeit von einem Wägesignal der Wägeeinrichtung gravimetrisch regelbar ist.

Mit einem derartigen Farbkonzentrat-Dispenser, mittels dem Farbkonzentratgranulate genau und exakt dosiert werden können, wird somit ein sauberes und funktionssicheres und zu den Pastendosiersystemen alternatives Dosiersystem zur Verfügung gestellt, mittels dem die benötigten Farbkonzentratgranulate trocken in ein Aufnahmebehältnis, insbesondere ein Zwischenbehältnis eindosiert werden können. Dadurch können die in Verbindung mit Pastendosiersystemen auftretenden Verunreinigungen durch Spritzer etc. vorteilhaft vermieden werden. Etwaige Verunreinigungen mit dem Granulat können einfachst durch Absaugen beseitigt werden, was bei den flüssigen Farben nicht der Fall ist, die durch Wischen relativ aufwendig beseitigt werden müssen. Durch die als trockenes Farbkonzentratgranulat vorliegenden Farbkonzentrate ist zudem sichergestellt, dass es zu keinem Austrocknen und Zusetzen der Armaturen und Leitungen kommen kann. Ein weiterer Vorteil dieses neuartigen Dispensersystems ist die nahezu 100%-ige Reproduzierbarkeit eines Farbtones ohne die sonst üblicherweise durch Pastenqualität und Dosierungenauigkeiten auftretenden Schwankungen bei Pastendosiersystemen. Denn durch die Mengenregeleinrichtung, die mit der Wägeeinrichtung und der Dosiereinrichtung regelungstechnisch gekoppelt ist, wird auf einfache Weise eine sehr genaue und damit funktionssichere Zudosierung selbst kleinster Granulatmengen möglich. Die Dosiermengen liegen je nach Farben- oder Lackrezeptur beispielsweise zwischen 0,05 bis 500 g. Grundsätzlich kann das Aufnahmebehältnis auch das Farben- oder Lackgebinde selbst sein, was jedoch eine sehr genaue und damit teure Wägeeinrichtung erforderlich macht, so dass die Zudosierung in ein relativ leichtes, leeres Zwischenbehältnis bevorzugt ist, mittels dem dann in das Farben- oder Lackgebinde, z. B. automatisiert, zudosiert wird.

Ein derartiger Dispenser weist gemäß einer besonders bevorzugten Ausgestaltung nach Anspruch 2 lediglich eine einzige Dosiereinrichtung auf, die im Betriebszustand in einer Dosierposition im Bereich oberhalb des auf der Wägeeinrichtung positionierten Zwischenbehältnisses angeordnet ist. Je nach Ausführungsform des Dispensers kann diese Dosiereinrichtung unterschiedlich ausgeführt sein, so z. B. als gesteuert verlagerbare Dosiereinrichtung, die dann zusammen mit einer Wägeeinrichtung und einem darauf positionierten Zwischenbehältnis mittels einer Steuereinrichtung gesteuert der Reihe nach zu den pro Dosierauftrag benötigten Granulatbehältern verlagert wird. Bevorzugt ist jedoch eine Ausführungsform, bei der nach Anspruch 4 die Wägeeinrichtung ortsfest angeordnet ist und bei der die für einen Dosierauftrag benötigten Granulatbehältern mittels einer Steuereinrichtung nacheinander in vorgegebener Reihenfolge gesteuert in deren Dosierposition verlagerbar sind. In Verbindung mit einer derartigen Ausführung könnte die Dosiereinrichtung ebenfalls ortsfest angeordnet sein, wobei jedoch je nach Ausführungsform zu berücksichtigen ist, dass die Dosiereinrichtung zur ungehinderten Positionierung der Granulatbehälter mittels einer Steuereinrichtung auch innerhalb vorgegebener Einstellbereiche gesteuert verlagerbar sein kann. Dies kann z. B. dergestalt erfolgen, dass die Dosiereinrichtung bei jeder Neupositionierung eines Granulatbehälters in eine Parkstellung verfahren wird, aus der heraus die Dosiereinrichtung bei positioniertem Dosierbehälter in deren Dosierposition verlagert wird.

Grundsätzlich gibt es verschiedene Möglichkeiten, die Dosiereinrichtung auszubilden, so z. B. als ein behälterauslassöffnungsseitiges Absperrventil betätigendes Aktorelement. Alternativ zu einem Absperrventil könnten auch andere Armaturen verwendet werden, mit denen die Behälterauslassöffnung zum Regulieren von Durchflussmengen gesperrt bzw. geöffnet werden kann, so z. B. Schieber oder Klappen als mittels eines Schaltelementes betätigbare Schaltarmaturen. Ein mit der Mengelregeleinrichtung ansteuerbarer Dosieraktor ist ganz allgemein mit Anspruch 3 beansprucht. Gemäß einer besonders bevorzugten konkreten Ausgestaltung ist das behälterauslassöffnungsseitige Absperrorgan durch eine Art Verschlusskappe aus einem Gummi- bzw. Elastomermaterial gebildet, die so geschlitzt ist, dass dieser Schlitz bei einem Zusammendrücken der Elastomerkappe mittels eines Dosieraktors eine Auslassöffnung des Behälters freigibt, aus der dann das jeweilige Farbkonzentratgranulat austreten kann. Ein derartiges Dosiersystem kann besonders einfach und vorteilhaft so aufeinander abgestimmt werden, dass in Abhängigkeit vom Betrag der mittels dem Dosieraktor auf die Elastomerkappe aufgebrachten Klemmkraft eine bestimmte, definierte Schlitzgröße freigegeben wird, über die die Größenordnung des Granulatmassenstroms aus dem Granulatbehälter gezielt gesteuert werden kann.

Letzteres ist insbesondere für den Fall vorteilhaft, wie dies mit Anspruch 10 beansprucht ist, dass mittels der Mengenregeleinrichtung die Dosiereinrichtung zur kontrollierten exakten Freigabe der Granulat-Sollwertmenge gezielt schrittweise angesteuert wird, um die Chargenmengen in vorgegebenen Dosiergrößen, die zum Ende des Dosiervorgangs kleiner werden, zudosieren zu können. Beispielsweise könnte hierdurch die Dosierung so eingestellt werden, dass bezogen auf die Granulat-Sollwertmenge in einem ersten Dosierschritt eine solche Chargenmenge in das Zwischenbehältnis zudosiert wird, die beispielsweise bei über 90% der Granulat-Sollwertmenge liegt, während die restliche Chargenmenge in wenigstens einem weiteren kleineren Dosierschritt zudosiert wird, beispielsweise in mehreren kleineren, jeweils z. B. eine gleiche Chargenmenge freigebenden Dosierschritten gepulst zudosiert wird.

Gemäß einer weiteren besonders bevorzugten Ausgestaltung nach Anspruch 5 sind die Granulatbehälter nachfüllbar und/oder austauschbar in einer Halteeinrichtung eines Magazins innerhalb eines Gehäuses des Farbkonzentrat-Dispensers gehaltert, mittels der bei jedem Dosierauftrag eine entsprechend vorgegebener Rezepturparameter vorgegebene Anzahl von Granulatbehältern gesteuert oberhalb der Wägeeinrichtung und damit des Zwischenbehältnisses in einer Dosierposition im Bereich der Dosiereinrichtung positionierbar ist. Das Magazin kann beispielsweise als linear verlagerbares Linearmagazin oder aber auch, bei einer größeren Anzahl von Granulatbehältern als sich revolvertrommelartig drehendes Magazin ausgebildet sein. Insbesondere die Verwendung eines Revolvermagazins gestattet einen insgesamt kompakten und platzsparenden Aufbau eines Farbkonzentrat-Dispensers.

Nach Anspruch 6 wird vorgeschlagen die Granulatbehälter in dem Dispenser so zu haltern, dass deren Behälterauslassöffnung im Bereich des tiefsten Punktes liegt, wobei insbesondere länglich ausgebildete Granulatbehälter mit stirnseitiger Auslassöffnung vorgesehen sein können, die auf dem Kopf stehend im Magazin gehaltert sind. Mit derartigen, dann vorzugsweise senkrecht angeordneten Granulatbehältern wird sichergestellt, dass das Granulat einfach und funktionssicher aufgrund seiner Schwerkraftwirkung ausströmt, wobei durch die Anordnung der Behälterauslassöffnung im tiefsten Punkt des Granulatbehälters gleichzeitig sichergestellt ist, dass kein unerwünschtes Totraumvolumen entsteht, in dem sich nicht mehr austragbares Farbkonzentratgranulat sammelt.

Als Granulatbehälter dienen vorzugsweise Einwegbehälter, in denen das Farbkonzentratgranulat angeliefert wird. Die Behälter, deren Anzahl sich z. B. zwischen 12 und 32 beläuft, müssen einfach zu wechseln sein. Um z. B. eine Falschbeschickung auszuschließen, wird nach Anspruch 7 vorgeschlagen, dass jeder Granulatbehälter mit einer Codierung versehen ist, beispielsweise mit einer mechanischen Codierung oder einem Barcode. Mittels einer derartigen Codierung kann in Verbindung mit einer ebenfalls vorzusehenden Erkennungs- und Auswahleinrichtung ein Erfassen und eine Auswahl der jeweiligen auszuwählenden Granulatbehälter eines Dosierauftrags in vorgegebener Reihenfolge funktionssicher durchgeführt werden.

Grundsätzlich gibt es verschiedene Möglichkeiten, die Wägeeinrichtung auszuführen. Bevorzugt ist nach Anspruch 8 eine Wägeeinrichtung durch eine elektromagnetische Waage bzw. Kraftkompensationswaage oder durch eine nach dem Kraftmessdosenprinzip in Verbindung mit Dehnungsmessstreifen arbeitende Waage ausgebildet. Eine derartige Waage braucht eine besonders hohe Auflösung und Genauigkeit, wobei zudem sichergestellt werden muss, dass die Wägeeinrichtung bei einem kontinuierlichen Zufluss von Farbkonzentratgranulat schnell verwertbare Informationen liefert. Insbesondere ist in Verbindung mit der Wägeeinrichtung auch sicherzustellen, dass in einer an sich bekannten Weise der Zeitversatz zwischen dem Austritt des Granulats aus der Behälterauslassöffnung und einem Auftreffen des Granulats im Zwischenbehältnis bzw. einem Ansprechen der Wägeeinrichtung genau berücksichtigt wird. Dadurch wird sichergestellt, dass die geforderte Granulat-Sollwertmenge nicht überschritten wird. Dies kann regelungstechnisch auf einfache Weise sichergestellt werden, in dem z. B., wie dies auch bereits zuvor erläutert worden ist, in Verbindung mit einer schrittweisen Zudosierung zum Ende des Dosiervorgangs hin kleine Chargenmengen gepulst zudosiert werden.

Um sicherzustellen, dass das Wägesignal nicht verfälscht wird, ist die Wägeeinrichtung nach Anspruch 9 in üblicher Weise vibrationsfrei zu lagern. Beispielsweise kann dadurch eine Beeinflussung durch eine neben dem Dispenser angeordnete Farbenmischvorrichtung ausgeschlossen werden.

Grundsätzlich kann das Zwischenbehältnis wie bereits zuvor erläutert, auch durch das Farben- oder Lackgebinde selbst gebildet sein, was jedoch aufgrund der zum Teil gegenüber dem Gebindegewicht sehr kleinen Granulatdosiermengen wägetechnisch nur relativ aufwendig zu realisieren ist, so dass das Zwischenbehältnis nach Anspruch 11 bevorzugt ein vor jedem Dosierauftrag leerer Zwischenspeicher für die Granulatcharge ist, die danach in ein dispenserfernes Farben- oder Lackgebinde eingebracht und eingemischt wird. Bevorzugt weist das Zwischenbehältnis dabei nach Anspruch 12 eine nicht haftende Innenwand, z. B. mit einer Nanobeschichtung auf. Dadurch ist sichergestellt, dass die Granulatcharge rückstandsarm aus dem Zwischenbehältnis ausgebracht werden kann, so dass sich eine sehr gute Reproduzierbarkeit des Farbtones ergibt.

Die Erfindung wird bezüglich des Verfahrens gelöst mit den Merkmalen des Anspruchs 13.

Mit einer derartigen Verfahrensführung können die zuvor in Verbindung mit dem Farbkonzentrat-Dispenser bereits näher erläuterten Vorteile auf einfache Weise verfahrenstechnisch erzielt werden. Besonders bevorzugt ist dabei eine Verfahrensführung nach Anspruch 14, gemäß der die Wägeeinrichtung nach dem Aufsetzen des Zwischengefäßes bzw. nach jedem Dosiervorgang innerhalb eines Dosierauftrags mittels der Mengenregeleinrichtung austariert wird. Damit ist die Erfassung und Auswertung einer zugegebenen Dosiercharge aus einem Granulatbehälter einfachst regelungstechnisch möglich. Grundsätzlich wäre jedoch aber auch eine kumulative Mengenüberwachung der einzelnen zuzudosierenden Granulatmengen denkbar, was jedoch einen höheren regelungstechnischen und softwaretechnischen Aufwand erfordert.

Bevorzugt ist auch eine Verfahrensführung nach Anspruch 15, gemäß der das Zwischenbehältnis nach der Befüllung mit der gewünschten Granulatcharge insbesondere automatisiert mittels einer Transporteinrichtung zu einem Farben- oder Lackgebinde, das z. B. in einer Mischereinrichtung angeordnet ist, transportiert wird und dort die Granulatcharge in das Farben- oder Lackgebinde zugegeben und anschließend vermischt wird.

Die Erfindung wird nachfolgend anhand einer Zeichnung näher erläutert.

Die einzige Figur zeigt äußerst schematisch das Grundprinzip eines erfindungsgemäßen Farbkonzentrat-Dispensers 1, der in einem hier aus Übersichtlichkeitsgründen nicht dargestellten Gehäuse ein Revolvermagazin 2 aufweist, in dem eine Mehrzahl von Granulatbehältern 3 mittels einer hier nicht dargestellten Halteeinrichtung austauschbar gehaltert sind. Aus Übersichtlichkeitsgründen sind hier lediglich drei Granulatbehälter 3 dargestellt.

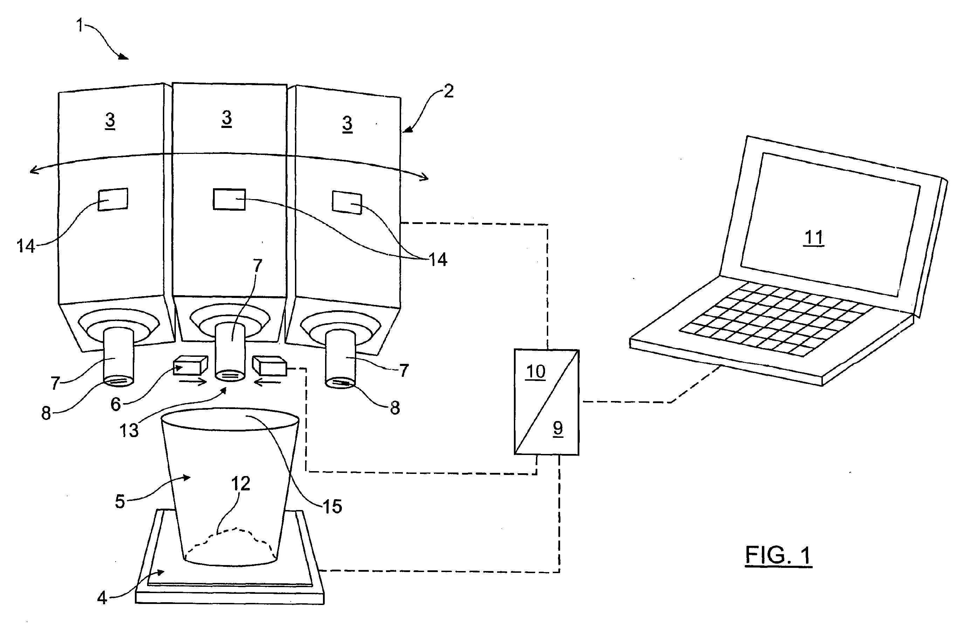

Der Dispenser 1 umfasst ferner eine Wägeeinrichtung 4, auf der ein Aufnahmebehältnis als Zwischenbehältnis 5 angeordnet ist. Ferner ist im Bereich oberhalb des Zwischenbehältnisses 5 ein Dosieraktor 6 angeordnet, der hier einer eine Auslassöffnung des sich in einer Dosierposition befindenden Granulatbehälters 3 verschließenden Verschlusskappe 7 aus einem Elastomermaterial zugeordnet ist. In dieser Verschlusskappe 7 sind Schlitze 8 angeordnet, die bei der in der Fig. 1 dargestellten, beabstandeten Position des Dosieraktors 6 geschlossen sind und keinen Austritt des im Granulatbehälter 3 aufgenommenen Farbkonzentratgranulates ermöglichen.

Die Wägeeinrichtung 4 ist ebenso wie der Dosieraktor 6 mittels einer Mengenregeleinrichtung 9, die hier lediglich äußerst schematisch dargestellt ist, regelungstechnisch gekoppelt, während das Revolvermagazin 2 mittels einer bevorzugt ebenfalls Bestandteil der Mengenregeleinrichtung 9 bildenden Steuereinrichtung 10 gekoppelt ist. Die Mengenregeleinrichtung 9 und die Steuereinrichtung 10 sind wiederum mit einer hier lediglich beispielhaft und schematisch dargestellten Rechnereinrichtung 11 gekoppelt, die bevorzugt integraler Bestandteil des Dispensers 1 ist. In dieser Rechnereinrichtung 11 sind die für jeden Farben- oder Lackwunsch benötigten Rezepturparameter abgelegt, so dass bei einer entsprechenden Eingabe des Rezepturwunsches in der Rechnereinrichtung über ein Aktivierungssignal die Steuereinrichtung 10 bzw. die Mengenregeleinrichtung 9 aktiviert wird, was nachfolgend näher erläutert wird:

So wird beispielsweise entsprechend den vorgegebenen Farben- oder Lackrezepturparametern die erforderliche Anzahl von Granulatbehältern 3 der Reihe nach mittels der Steuereinrichtung 10 gesteuert in den Bereich des Dosieraktors 6 bewegt, der dann entsprechend angesteuert mittels der Mengenregeleinrichtung 9 die Verschlusskappe 7 so zusammenpresst, dass im Bereich der Schlitze 8 Spaltöffnungen ausgebildet sind, über die so lange Farbkonzentratgranulat 12 in das Zwischenbehältnis 5 zudosiert wird, bis in Abhängigkeit von dem von der Wägeeinrichtung 4 an die Mengenregeleinrichtung 9 gelieferten Wägesignal festgestellt wird, dass die gewünschte Granulat-Sollwertmenge aus dem sich gerade in der Dosierposition 13 befindendem Granulatbehälter 3 abgegeben worden ist. In diesem Fall wird dann mittels der Mengenregeleinrichtung 9 der Dosieraktor 6 so angesteuert, dass dieser die Verschlusskappe 7 wieder freigibt, wodurch das Ausströmen des Farbkonzentratgranulates 12 aus dem Granulatbehälter 3 gestoppt wird. Anschließend kann dann die Wägeeinrichtung 4 wieder austariert werden, d. h. diese beispielsweise auf Null gesetzt werden und mittels der Steuereinrichtung 10 entsprechend der vorgegebenen Rezeptur der nächste Granulatbehälter 3 in seine Dosierposition 13 im Bereich des Dosieraktors 6 oberhalb des Zwischenbehältnisses 5 gebracht werden.

Der oben geschilderte Dosiervorgang wird dann in analoger Weise für diesen Granulatbehälter 3 von Neuem durchgeführt. Wie dies in der Fig. 1 in Verbindung mit den Granulatbehältern 3 lediglich äußerst schematisch dargestellt ist, können diese Granulatbehälter 3 mit einer Codierung 14 versehen sein, mittels der in Verbindung mit einer Erkennungs- und Auswertungseinrichtung, die hier nicht dargestellt ist, eine Auswahl der jeweils geforderten Granulatbehälter 3 erfolgen bzw. auch überwacht werden kann.

Sobald die gewünschte mengenmäßige Zusammensetzung der Farbkonzentratcharge im Zwischenbehältnis 5 erreicht ist, wird der Dosiervorgang abgebrochen und das Zwischenbehältnis 5 kann dann dem Dispenser 1, z. B. über eine Verschlussklappe am Gehäuse, entnommen werden und in ein Farbgebinde eingebracht werden, das dann in einer Mischereinrichtung zur gewünschten Farbe vermischt wird. Um ein rückstandsfreies Ausbringen der Farbkonzentratcharge aus dem Zwischenbehältnis 5 sicherzustellen, kann dessen Innenwand 15 eine nicht haftende Beschichtung aufweisen.

## Patentansprüche

1. Farbkonzentrat-Dispenser
mit einer Mehrzahl von Granulatbehältern (3), in denen in Farben und/oder Lacken lösliches Farbkonzentratgranulat aufgenommen ist, wobei jeder Granulatbehälter (3) eine verschließbare Behälterauslassöffnung aufweist, die so mit einer Dosiereinrichtung (6) zusammenwirkt, dass eine vorgegebene Granulatmenge über die Behälterauslassöffnungen aus den für einen Dosierauftrag entsprechend vorgegebener Farben- oder Lackrezepturparameter benötigten Granulatbehältern (3) ausbringbar ist,
mit einem Aufnahmebehältnis, insbesondere Zwischenbehältnis (5) für die pro Dosierauftrag aus den Granulatbehältern (3) freigegebene Granulatmenge,
mit einer Wägeeinrichtung (4), die während eines Dosierauftrags mit dem Zwischenbehältnis (5) gekoppelt ist, und
mit einer Mengenregeleinrichtung (9), die mit der Wägeeinrichtung (4) und der Dosiereinrichtung (6) regelungstechnisch gekoppelt ist und mittels der die Zudosierung einer vorgegebenen Granulatmenge aus den Granulatbehältern (3) in das Zwischenbehältnis in Abhängigkeit von einem Wägesignal der Wägeeinrichtung (4) regelbar ist.

2. Farbkonzentrat-Dispenser nach Anspruch 1, **dadurch gekennzeichnet, dass** eine einzige Dosiereinrichtung (6) vorgesehen ist, die im Betriebszustand in einer Dosierposition (13) im Bereich oberhalb des auf der Wägeeinrichtung (4) positionierten Zwischenbehältnisses (5) angeordnet ist.

3. Farbkonzentrat-Dispenser nach Anspruch 1 oder Anspruch 2, **dadurch gekennzeichnet, dass** die Dosiereinrichtung (6) einen mittels der Mengenregeleinrichtung (9) ansteuerbaren Dosieraktor aufweist, mittels dem ein behälterauslassöffnungsseitiges Absperrorgan (7) betätigbar ist.

4. Farbkonzentrat-Dispenser nach einem der Ansprüche 1 bis 3, **dadurch gekennzeichnet, dass** die Wägeeinrichtung (4) ortsfest angeordnet ist und die für einen Dosierauftrag benötigten Granulatbehälter (3) mittels einer Steuereinrichtung (10) nacheinander in vorgegebener Reihenfolge gesteuert in deren Dosierposition (13) verlagerbar sind.

5. Farbkonzentrat-Dispenser nach Anspruch 4, **dadurch gekennzeichnet, dass** die Granulatbehälter (3) nachfüllbar und/oder austauschbar in einer Halteeinrichtung eines insbesondere als Linear- oder Revolvermagazin ausgebildeten Magazins (2) des Dispensers (1) gehaltert sind, mittels der bei jedem Dosierauftrag eine entsprechend vorgegebener Rezepturparameter vorgegebene Anzahl von Granulatbehältern (3) gesteuert oberhalb der Wägeeinrichtung (4) und damit des Zwischenbehältnisses (5) in einer Dosierposition (6) im Bereich der Dosiereinrichtung (6) positionierbar ist, wobei die Dosiereinrichtung (6) gegebenenfalls gesteuert in ihre Dosierposition (13) verlagerbar ist.

6. Farbkonzentrat-Dispenser nach Anspruch 5, **dadurch gekennzeichnet, dass** die Granulatbehälter (3) in dem Dispenser (1) als Dosiervorrichtung so gehaltert sind, dass deren Behälterauslassöffnung im Bereich des tiefsten Punktes liegt, insbesondere länglich ausgebildete Granulatbehälter (3) mit stirnseitiger Auslassöffnung auf dem Kopf stehend im Magazin (2) gehaltert sind.

7. Farbkonzentrat-Dispenser nach einem der Ansprüche 1 bis 6, **dadurch gekennzeichnet, dass** jeder Granulatbehälter (3) mit einer Codierung (14), insbesondere einer mechanischen Codierung oder einem Barcode versehen ist, mittels der in Verbindung mit einer Erkennungs- und Auswahleinrichtung ein Erfassen und eine Auswahl der jeweiligen Granulatbehälter (3) eines Dosierauftrags in vorgegebener Reihenfolge durchführbar ist.

8. Farbkonzentrat-Dispenser nach einem der Ansprüche 1 bis 7, **dadurch gekennzeichnet, dass** die Wägeeinrichtung (4) durch eine elektromagnetische Waage bzw. Kraftkompensationswaage oder durch eine nach dem Kraftmessdosenprinzip, insbesondere mit Dehnungsmessstreifen, arbeitende Waage ausgebildet ist.

9. Farbkonzentrat-Dispenser nach einem der Ansprüche 1 bis 8, **dadurch gekennzeichnet, dass** die Wägeeinrichtung (4) vibrationsfrei gelagert ist.

10. Farbkonzentrat-Dispenser nach einem der Ansprüche 1 bis 9, **dadurch gekennzeichnet, dass** die Mengenregeleinrichtung (9) die Dosiereinrichtung (6) zur kontrollierten exakten Freigabe der Granulat-Sollwertmenge gezielt so schrittweise ansteuert, dass die Chargenmengen in vorgegebenen Dosiergrößen, die zum Ende des Dosiervorgangs hin kleiner werden, zudosiert werden, insbesondere zum Schluss des Dosiervorgangs vorgegebene Chargenmengen gepulst zudosiert werden.

11. Farbkonzentrat-Dispenser nach einem der Ansprüche 1 bis 10, **dadurch gekennzeichnet, dass** das Zwischenbehältnis (5) ein vor jedem Dosierauftrag leerer Zwischenspeicher ist.

12. Farbkonzentrat-Dispenser nach einem der Ansprüche 1 bis 11, **dadurch gekennzeichnet, dass** das Zwischenbehältnis (5) eine - bezogen auf das Farbkonzentratgranulat - nicht haftende Innenwand (15), vorzugsweise eine nanobeschichtete Innenwand aufweist.

13. Verfahren zur Dosierung von Farbkonzentraten in ein Aufnahmebehältnis, insbesondere mittels eines Farbkonzentrat-Dispensers nach den Ansprüchen 1 bis 12, **dadurch gekennzeichnet,**
**dass** in einem ersten Verfahrensschritt ein mit einer Wägeeinrichtung (4) gekoppeltes Aufnahmebehältnis, insbesondere ein Zwischenbehältnis (5), und ein entsprechend vorgegebener Farben- oder Lackrezepturparameter ausgewählter Granulatbehälter (3) aus einem Magazin (2) von Granulatbehältern (3), in denen jeweils ein in Farben und/oder Lacken lösliches Farbkonzentratgranulat aufgenommen ist, relativ zueinander so verlagert werden, dass eine Behälterauslassöffnung des Granulatbehälters (3) oberhalb des Zwischenbehältnisses (5) positioniert wird, wobei dem Granulatbehälter (3) in dieser Dosierposition (13) eine Dosiereinrichtung (6) zugeordnet ist oder zugeordnet wird,
**dass** in einem zweiten Verfahrensschritt die Dosiereinrichtung (6) mit einer außerdem mit der Wägeeinrichtung (4) regelungstechnisch gekoppelten Mengenregeleinrichtung (9) so angesteuert wird, dass mittels dieser die Zudosierung einer vorgegebenen Granulatmenge aus dem Granulatbehälter (3) in das Zwischenbehältnis (5) in Abhängigkeit von einem Wägesignal der Wägeeinrichtung (4) gravimetrisch geregelt wird, und
**dass** nach der erfolgten Freigabe der vorgegebenen Granulat-Sollwertmenge aus dem Granulatbehälter (3) gegebenenfalls ein weiterer oder weitere Granulatbehälter (3) mittels einer insbesondere Bestandteil der Mengenregeleinrichtung (9) bildenden Steuereinrichtung (10) entsprechend der vorgegebenen Rezepturparameter in Dosierposition und Wirkverbindung mit der Dosiereinrichtung (6) gebracht werden.

14. Verfahren nach Anspruch 13, **dadurch gekennzeichnet, dass** die Wägeeinrichtung (4) nach dem Aufsetzen des Zwischenbehältnisses (5) und/oder nach jedem Dosiervorgang innerhalb eines Dosierauftrags mittels der Mengenregeleinrichtung (9) austariert wird.

15. Verfahren nach Anspruch 13 oder Anspruch 14, **dadurch gekennzeichnet, dass** das Zwischenbehältnis (5) nach der Befüllung mit der gewünschten Granulatcharge (12), insbesondere einer Granulatmischung aus mehreren Farben, mittels einer Transporteinrichtung zu einem Farben- oder Lackgebinde transportiert wird und dort die Granulatcharge in das Farben- oder Lackgebinde zugegeben wird.
